Europäisches Patentamt

European Patent Office

Office européen des brevets

(19)

(11) **EP 1 073 012 A1**

(12) **EUROPEAN PATENT APPLICATION**

(43) Date of publication:
**31.01.2001 Bulletin 2001/05**

(51) Int Cl.⁷: $G06N\ 3/04$

(21) Application number: **99114895.8**

(22) Date of filing: **30.07.1999**

(84) Designated Contracting States:
**AT BE CH CY DE DK ES FI FR GB GR IE IT LI LU MC NL PT SE**
Designated Extension States:
**AL LT LV MK RO SI**

(72) Inventors:
- **Douglas Rodney James**
  **8008 Zürich (CH)**
- **Hahnloser Richard**
  **1700 Fribourg (CH)**
- **Hepp Klaus**
  **8053 Zürich (CH)**

(71) Applicants:
- **Eidgenössische Technische Hochschule Zürich**
  **8092 Zürich (CH)**
- **Universität Zürich**
  **8057 Zürich (CH)**

(74) Representative: **Blum, Rudolf Emil Ernst et al**
**c/o E. Blum & Co**
**Patentanwälte**
**Vorderberg 11**
**8044 Zürich (CH)**

(54) **A method and circuit for neuron-like processing of data**

(57)     An array of circuit elements (neurons) consists of map neurons and pointer neurons, wherein the number of map neurons is much larger than the number of pointer neurons. Each map neuron is connected to at least one pointer neuron. Data for processing is fed to inputs of the map neurons. The pointer neurons are used for selectively activating parts of the map neurons, for providing feedback among the map neurons and for reading characteristics of the map neurons. The system can e.g. be used for processing one or more dimensional data.

Fig. 1

EP 1 073 012 A1

**Description**

The invention relates to a method and a circuit for analysing data derived from a physical process and/or for driving a physical process from data according to the preamble of the independent claims.

Methods of this kind are often carried out in so called "recurrent maps", networks of interconnected neurons. In the context of this application as well as of the claims, the term "network of neurons" refers to a network of entities, wherein each entity is able to represent an analogue or finely discretised value, the time dependence of which is governed by the present values of the neurons and by input values to the neurons, e.g. as given in Equations (1) and (2) below. Examples for such neurons are e.g.:

- Analogue electric circuit elements where the value is represented as a voltage or a current. There are various methods for implementing such circuit elements, see e.g. J. J. Hopfield, "Neurons with graded response have collective properties like those of two-state neurons", Proc. Natl. Acad. Sci. USA, 81, 3088 (1984)
- Integer or floating point storage elements in a computer running a program that integrates the equations governing the time dependence of the values.

Neuronal networks of this type can be used in various types of data processing. In particular, they can be used for analysing data derived from a physical process, such as images of the real world, sound, or data from other type of sensors, see e.g. M. Mahowald and C. Mead, "Silicon retina", Science 264(5), 76 (1991) and R. Sarpeshkar, R.F. Lyon and C.A. Mead, "An analog (VLSI) cochlea with new transconductance amplifiers and nonlinear gain control", Proceedings of the IEEE Symposium on Circuits and Systems 3, 292. They can also be used for driving a physical process, such as for controlling motions of a robot or guiding traffic by means of suitable traffic controls, see e.g. T. Horiuchi, B. Bishofberger and C. Koch in "NIPS: Neural Information Processing Systems", Ed. J. Cowan, G. Tesauro and J. Alspector, published by Morgan Kaufmann, San Mateo, 1994,

In order to fully exploit the power of such networks, it is desired to improve their versatility while keeping their architecture as simple as possible. The problem to be solved by the present invention is therefore to provide a method and a circuit of the type mentioned above that works on a neuronal network of simple but versatile design. This problem is solved by the independent claims.

The invention uses a network comprising two different types of neurons: map neurons and pointer neurons. Each map neuron is connected to at least one pointer neuron and may also be connected to one or more other map neurons. The number of map neurons is much larger than the number of pointer neurons, which leads to a geometry where a pointer neuron is usually connected to a large number of map neurons. In such a geometry, the pointer neurons provide efficient access to the map neurons, e.g. for reading out characteristic values of the map, for activating desired parts of the map, and/or for providing feedback within the map. At the same time, the topography of the network remains fairly simple.

The map neurons are provided with input values that are preferably used for receiving the data to be processed, while the inputs to the pointer neurons control the analysis of the data. The values of the pointer neurons can be read for analysing the state of the map.

In a very simple design, the all elements of the matrix describing the interactions between the map neurons have the same negative value.

The interactions between the map and the pointer neurons are preferably weighed by sine and cosine functions. As shown below, such weights have various advantages. In particular, they lead to a local interaction between the map neurons, they permit to direct attention to any part of the map, and they allow to analyse the map efficiently.

As mentioned above, the invention is particularly suited for processing data derived from a physical process. In particular, it can be used for image processing, pattern recognition, target tracking, sound analysis, etc. It can also be used to control various physical processes, such as the movements of robots or vehicles, the traffic in a city, etc.

Further embodiments as well as applications of the invention are described in the dependent claims as well as in the following description of preferred embodiments, which makes reference to the figures. The figures show:

Fig. 1 the basic geometry of a network according to the invention,
Fig. 2 the geometry of a preferred network with a one-dimensional map,
Fig. 3 the time evolution of the values in a network of Fig. 2 without pointer input,
Fig. 4 the time evolution of the values in a network of Fig. 2 with directed attention,
Fig. 5 the time evolution of the values in a network of Fig. 2 with remapping, and
Fig. 6 the time evolution of the values in a network of Fig. 2 with attentional memorisation.

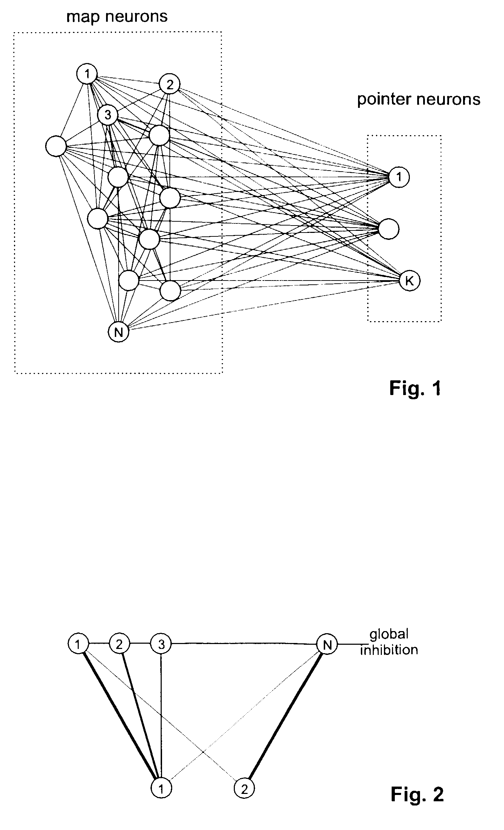

Fig. 1 shows a network having $N$ map neurons and K pointer neurons. A value $M_i$ is attributed to each map neuron, a value $P_i$ to each pointer neuron. In a biological network these values correspond to the firing rates of the neurons. In hardware implementations, they can e.g. correspond to voltages or currents in circuits simulating the neurons.

Generally, the number $N$ of map neurons is much larger than the number $K$ of pointer neurons, i.e. $N >> K$.

The network's behaviour is described by the following equations:

$$\frac{\partial}{\partial t}f(M) = -M + T(WP + BM + \mu), \tag{1}$$

$$\frac{\partial}{\partial t}f(P) = -P + T(W^T M + \pi), \tag{2}$$

where **M** is the array $(M_1, ..., M_N)$ of the values of the map neurons and **P** is the array $(P_1, ..., P_K)$ of the values of the pointer neurons. **W** is a $N \times K$ matrix with elements $W_{ij}$ describing the interaction strength from pointer neuron $j$ to map neuron $i$, **W**$^T$ is the transposed of **W**. **B** is a symmetric $N \times N$ matrix with elements $B_{ij}$ describing the interaction strength between each pair of map neurons. $\mu$ is the vector $(\mu_1, ..., \mu_N)$ of input values to the map neurons, and $\pi$ is the vector $(\pi_1, ..., \pi_N)$ of input values to the pointer neurons. f is a monotonically increasing function, e.g. $f(x) = \ln(x)$ or $f(x) = x$. T is a non-linear transfer function, preferably

$$T(x) = \max(0, x). \tag{3}$$

In an alternative embodiment, we use $T(x) = \tanh(x)$.

To simplify notations, Eqs. (1) and (2) assume that all time constants are 1. Otherwise, $\partial/\partial t$ must be replaced by $\tau\partial/\partial t$ and $\sigma\partial/\partial t$ respectively, where $\tau$ and $\sigma$ are diagonal matrices with time constants for each neuron. The concepts described in this application also apply to systems with such time constants not equal to 1 and the claims are to be interpreted correspondingly, even though the following assumes that the time constants are 1. The same applies to multiplicative factors that could be added to the terms $\mu$ and $\pi$ in Eqs. (1) and (2).

Since the interactions between all neurons are symmetric, the neurons form a so called "Hopfield" network.

In steady state, the time derivatives of Eqs. (1) and (2) are 0 and the value of **P** in Eqn. (1) can be replaced by the corresponding value of Eqn. (2). When $T$ is given by Eq. (3), we obtain in the positive regime (an assumption that is generally made in the following):

$$M = (WW^T + B)M + W\pi + \mu \tag{4}$$

In other words, the steady state corresponds to the one of a conventional map without pointer neurons where the neuron interaction is given by **WW**$^T$ + **B** and the input to the neurons by **W**$\pi$ + $\mu$. Hence, the pointer neurons provide additional interaction between the map neurons through the term **WW**$^T$, and they also provide a means for additional input through the term **W**$\pi$. These effects are discussed in the following.

The term **WW**$^T$ can be used for providing interactions between map neurons that are fairly complex even though a simple matrix **B** is used. A typical choice for **B** that provides stability while being easy to implement is

$$B_{ij} = -\beta \text{ for all } i \text{ and } j, \tag{5}$$

where $\beta$ is a positive number describing a global inhibition of the map neurons.

The term **W**$\pi$ in Eq. (4) can e.g. be used for selectively activating subsets or regions of map neurons. In a preferred embodiment, the first two pointer neurons are assumed to have a sine and cosine interaction with the map neurons, i.e.

$$W_{i1} = \alpha \cdot \cos(\delta_i) \tag{6}$$

and

$$W_{i2} = \alpha \cdot \sin(\delta_i),$$

where $\alpha$ is a positive constant and where

$$\delta_i = \pi \cdot (i\text{-}1)/(2 \cdot (N\text{-}1)). \tag{7}$$

(An arbitrary constant can be added to the right hand side of Eq. (7) without deviating from the concept of the invention.)

Using Eqs. (6) and (7) and assuming that and $\pi_k = 0$ for $k > 2$, $\mathbf{W}\pi$ becomes

$$(\mathbf{W}\pi)_i = \alpha \cdot (\cos(\delta_i) \cdot \pi_1 + \sin(\delta_i) \cdot \pi_2). \tag{8}$$

When choosing

$$\pi_1 = \cos(\gamma) \text{ and } \pi_2 = \sin(\gamma) \tag{9}$$

(with $0 \leq \gamma \leq \pi/2$ for the positive regime), Eqn. (8) becomes

$$(\mathbf{W}\pi)_i = \alpha \cdot \cos(\delta_i - \gamma). \tag{10}$$

In other words, the term $\mathbf{W}\pi$ generates an input that is strongest at the location of the map neuron where $\delta_i = \gamma$. The input to the pointer neurons can be used for selectively activating an area within the map neurons.

Using weights according to Eqn. (6) has the further advantage that, in the case of two pointer neurons, i.e. $K{=}2$, the term $\mathbf{WW}^T$ in Eqn. (4) yields

$$(\mathbf{WW}^T)_{ij} = \alpha^2 \cdot \cos(\delta_i - \delta_j). \tag{11}$$

This corresponds to the local feedback term in a recurrent map with cosine interactions.

Hence, the pointer neurons can be used for activating parts within the map (through term $\mathbf{W}\pi$ of Eq. (4)), and they also provide a feedback mechanism for the map neurons (through term $\mathbf{WW}^T$ of Eq. (4)).

A further application of the pointer neurons lies in reading out the map neurons. In steady state and in the absence of pointer input signals ($\pi = 0$), Eq. (2) becomes in the positive regime:

$$P = W^T M \tag{12}$$

Hence, $\mathbf{P}$ is a function of the values of the map, i.e. the knowledge of $\mathbf{P}$ provides information about the distribution of $\mathbf{M}$. If, for instance, we use the assumptions of Eqs. (3), (5) and (6), we obtain for $P_i > 0$:

$$P_1 = \alpha \sum_k \cos(\delta_k) \cdot M_k$$

and

$$P_2 = \alpha \sum_k \sin(\delta_k) \cdot M_k$$

where the sums extend over all map neurons. If the map neurons have converged to a single pronounced peak, e.g. at $\delta_0$, the value of $P_2/P_1$ will substantially correspond to the tangent of the position of this peak, i.e. the peak position can be retrieved by reading the values of the pointer neurons alone. (The height of the peak can be retrieved from the height of the values of the pointer neurons.)

An example for an embodiment of a system with two pointer neurons and a large number of map neurons linked with the weights of Eqs. (5) and (6) is shown in Fig. 2.

It can be shown that such a system will converge for any input values $\mu$ and $\pi$ if

$$\alpha \leq \sqrt{\frac{1}{N} + \beta}\,.\qquad\qquad(13)$$

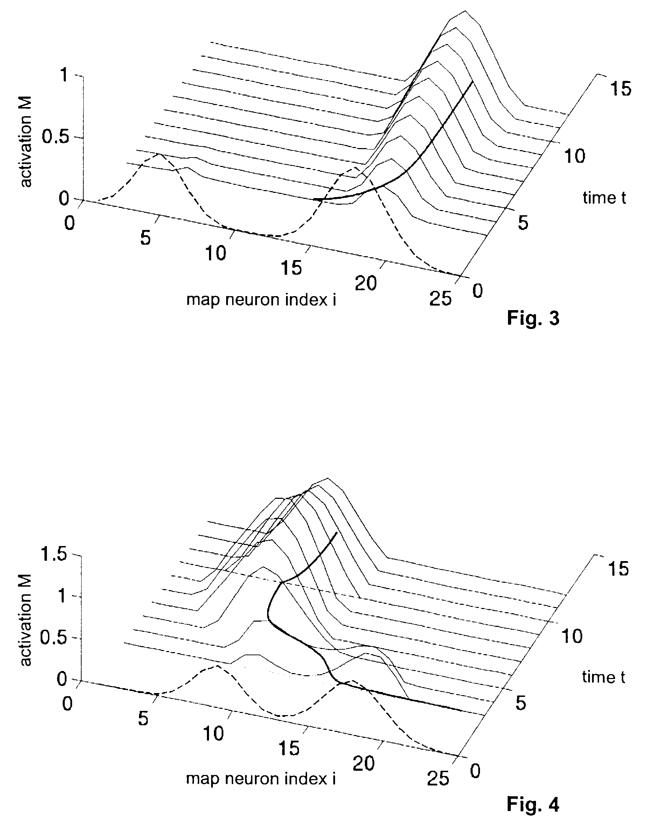

An application of such a network lies in the detection of a peak in signal restoration. This is illustrated for a the one-dimensional case in Fig. 3. This graph shows the values $M_i$ of the map neurons for a map having 25 neurons connected to two pointer neurons with weights according to Eq. (6). The inputs $\pi_i$ to the pointer neurons are 0. The map and pointer neuron values are initialized to zero. The dashed curve at t=0 shows the static input values $\mu_i$ to the map neurons, the curves starting at t=3 the time evolution of the values $M_i$. The bold line shows the time evolution of the value

$$\gamma = 1 + 2\cdot (N\text{-}1)\cdot\arctan(P_2/P_1)/\pi.$$

As can be seen, the values $M_i$ converge to represent the larger of the two input peaks and the value $\gamma$ indicates this peak to be at $i = 18$, i.e. the calculation of $\gamma$ provides an efficient way for locating the position of a single peak detected by the map.

Such a system can e.g. be used for tracking the position of a target and for pointing a robot arm towards said target.

A further feature of such a network lies in the ability to direct "attention" towards individual parts of the map by feeding suitable values to the pointer neuron inputs $\pi$. This is illustrated in Fig. 4. Here, the dashed curve and t=0 again represents the static input values $\mu_i$ to the map neurons and the curves starting at t=3 show the time evolution of the values $M_i$. The bold line is the evolution of the value $\gamma$. The pointer neurons have been initialised to $\mathbf{P}(0) = (0, 1.5)$. Initially, the pointer input values $\pi$ are set to (0.6, 0), forcing the pointer to direct its excitatory feedback loop to the left of the map, bypassing the location of the strongest input peak and selecting the weaker input peak, which is consecutively selected by the map neurons. At t=9, the pointer input values $\pi$ are set to (0, 0), but the activity profile remains at the weaker input peak.

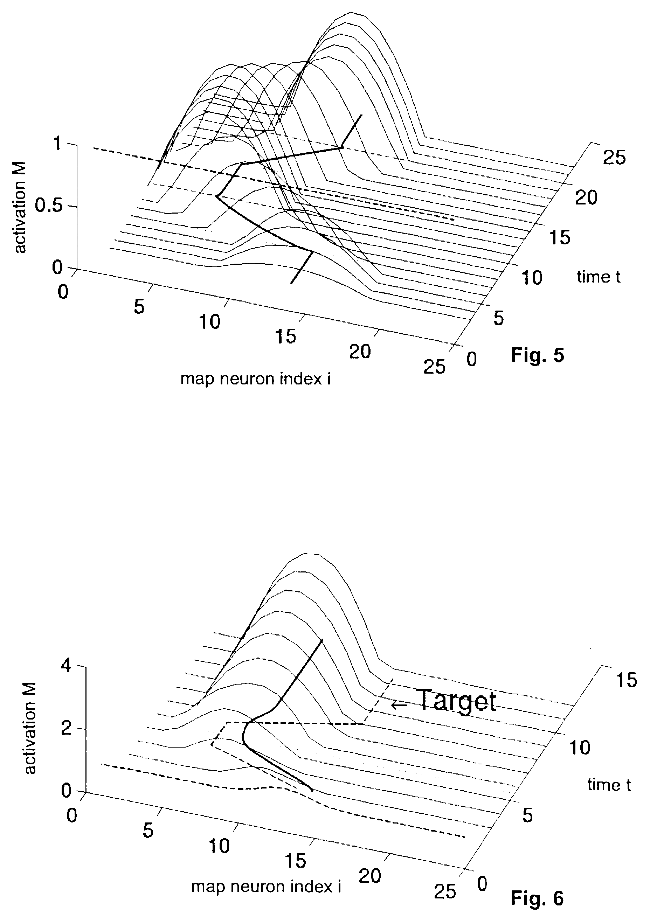

Fig. 5 shows a mode of operation called dynamic remapping. Here, the input to the map is uniform. Initially, there is no input to the pointer neurons, i.e. $\pi = (0, 0)$. At t=7, the inputs $\pi$ are set to (0.4, -0.4), which steers the activity on the map continuously toward the left. At t = 11, the inputs $\pi$ are again set to (0, 0), at t = 15 to (-0.4, 0.4), at t = 19 to (0, 0). As can be seen, the attractor can be moved by setting $\pi$ to a suitable value, while it remains stationary when $\pi$ is (0, 0).

Fig. 6 illustrates a further concept that can be implemented by the circuit, "attentional memorisation". Here, the input $\pi$ to the pointer neurons is initially set to (0, 0). The map receives a uniform background input of amplitude 1 that provides the energy enabling self-sustained activity. A Gaussian target of height 1 is added to the input. The location of the target evolves in time as shown by the dashed line titled "Target". First, it drifts from the middle toward the left, where it stops. The passive pointer (the pointer values $\mathbf{P}$) tracks the target. At t = 6.5, the pointer receives a sustained input parallel to its current value, $\pi = \mathbf{P}(t{=}6.5)/5$. This freezes the pattern of the map - even when the target subsequently starts to drift away towards the right, the map activity and the pointer remain stable at the location at t = 6.

In the embodiments of Figs. 4 - 6, the inputs to the pointer neurons were used for controlling how the input values to the map neurons are processed, i.e. the input values $\pi$ are used for "steering" the analysis of the input values $\mu$.

In the embodiment in Fig. 2, the weights $W_{ij}$ were chosen according to Eq. (6). If more than two pointer neurons are used, the following weights between pointer $j$ and map neuron $i$ can be used

$$W_{ij} = \alpha_{(j+1)/2}\cdot\cos(\delta_j\cdot(j+1)/2) \text{ for odd } j\qquad\qquad(14)$$

$$W_{ij} = \alpha_{j/2}\cdot\sin(\delta_j\cdot j/2) \text{ for even } j$$

where the $\alpha_i$ are arbitrary coefficients. It can be shown that for such functions, the term $\mathbf{WW}^T$ again only depends on the difference $\delta_i - \delta_j$ (and not on the actual values of $\delta_i$ and $\delta_j$), i.e. the pointer neurons act uniformly on the whole map.

When using more than two pointer neurons, the coefficients $\alpha_i$ can be used as design parameters in order to optimise the effects of the pointer neurons on the map neurons. In particular, it becomes possible to narrow the width of the feedback that is generated by the term $\mathbf{WW}^T$ in Eqn. (4) and to gain more information about the characteristics of the values of the map neurons by reading the values of the pointer neurons.

The choices in Eqs. (5) and (6) inherently lead to a one-dimensional neuron map that is suitable for processing one-dimensional problems, such as a pixelised one dimensional image, a time series e.g. of digitised sound, or the value of an analogue variable mapped to the map neurons. The present concept can, however, also be applied to multi-dimensional neuron maps.

For processing two-dimensional data, the map neurons are considered to be arranged in a matrix **M'** of size $R \times S$, which is mapped to the array **M** via

$$M_1 \ldots M_R = M'_{11} \ldots M'_{1R},$$

$$M_{R+1} \ldots M_{2R} = M'_{21} \ldots M'_{2R},$$

etc.

Generally, for n dimensions, the map neurons are considered to be logically arranged in a matrix **M'** of size $R_1 \times R_2 \times \ldots \times R_n$ and a suitable index mapping function $I(i_1, i_2, \ldots, i_n)$ is provided for mapping the indices of matrix **M'** to those of array **M**. The inverse of the index mapping function is a vector valued function **J**(i) with components $J_1(i) \ldots J_n(i)$ returning the indices in matrix **M'** for each index $i$ in array **M**.

For a matrix **M'** of n dimensions, at least $2n$ pointer neurons are required in order to perform the above operations for each of the dimensions of **M'**.

In a preferred embodiment, we again use sine and cosine functions for the strength of interaction between the map and pointer neurons. In analogy to Eq. (6), two neurons are used for each dimension of **X** and the corresponding interactions are:

$$W_{i1} = \alpha_1 \cdot \cos(\varphi_1(J_1(i))), \tag{15}$$

$$W_{i2} = \alpha_1 \cdot \sin(\varphi_1(J_1(i))),$$

$$W_{i3} = \alpha_2 \cdot \cos(\varphi_2(J_2(i))),$$

$$W_{i4} = \alpha_2 \cdot \sin(\varphi_2(J_2(i))),$$

etc.
Or, generally:

$$W_{i,j} = \alpha_{(j+1)/2} \cdot \cos(\varphi_{(j+1)/2}(J_{(j+1)/2}(i))) \text{ for } j \text{ odd} \tag{16}$$

$$W_{i,j} = \alpha_{j/2} \cdot \sin(\varphi_{j/2}(J_{j/2}(i))) \text{ for } j \text{ even}$$

where

$$\varphi_k(i) = \pi \cdot (i-1)/(2 \cdot (R_k-1)). \tag{17}$$

(An arbitrary constant can be added to the right hand side of Eqn. (7) without deviating from the concept of the invention.)

Eq. (16) can again be generalised for more than two pointer neurons per dimension as in Eq. (14). For at least one dimension d of the matrix **M'**, there are two pointer neurons $j', j''$ having the weights

$$W_{ij'} = \alpha'_d \cdot \cos(\varphi_d(J_d(i)) \cdot z) \tag{18}$$

$$W_{ij''} = \alpha'_d \cdot \sin(\varphi_d(J_d(i)) \cdot z)$$

with $z$ being an integer larger than 1 and $\alpha'_d$ being a constant.

**Claims**

1.  A method for analysing data derived from a physical process and/or for driving a physical process from data, wherein said data is fed as input data to a network of neurons, and wherein a value is attributed to each neuron, the time dependence of which value depends on the current values of the neurons and of input values to the neurons, characterised in that $N$ neurons are map neurons and a $K$ neurons are pointer neurons, wherein $N$ is much larger than $K$,

    wherein the time derivatives of the values $M_i$ of the map neurons are given by

    $$\frac{\partial}{\partial t}f(M) = -M + T(WP + BM + \mu),$$

    wherein **M** is the array $(M_1, ..., M_N)$ of the values of the map neurons, and wherein the time derivatives of the values $P_i$ of the pointer neurons are given by

    $$\frac{\partial}{\partial t}f(P) = -P + T(W^{T}M + \pi),$$

    wherein **P** is the array $(P_1, ..., P_K)$ of the values of the pointer neurons,
    wherein **W** is a $N \times K$ matrix with elements $W_{ij}$ describing the interaction strength from each pointer neuron to each map neuron, **W**$^{T}$ is the transposed of **W**, **B** is a $N \times N$ matrix with elements $B_{ij}$ describing the interaction strength between each pair of map neurons, $\mu$ is the vector $(\mu_1, ..., \mu_N)$ of input values to the map neurons, $\pi$ is the vector $(\pi_1, ..., \pi_N)$ of input values to the pointer neurons T is a non-linear transfer function and f a monotonically increasing function.

2.  The method of claim 1, wherein said transfer function T is given by $T(x) = \max(0, x)$.

3.  The method of one of the preceding claims wherein $f(x) = \ln(x)$ or $f(x) = x$.

4.  The method of one of the preceding claims wherein said data are fed to the input values of the map neurons and preferably wherein the input values of the pointer neurons are used for steering the analysis.

5.  The method of one of the preceding claims, wherein the values of said pointer neurons are used for reading out characteristics of the values of said map neurons.

6.  The method of one of the preceding claims, wherein said matrix **B** is symmetric.

7.  The method of one of the preceding claims, wherein the matrix **B** has the form

    $$B_{ij} = -\beta \text{ for all } i \text{ and } j,$$

    wherein $\beta$ is a positive number.

8.  The method of one of the preceding claims, wherein the map neurons are logically arranged in a matrix **M'** of $n$ dimensions having a size $R_1 \times R_2 \times ... \times R_n$, with an inverse index mapping function **J**(i) for mapping an index of said array **M** to indices of said matrix **M'**, wherein, for at least two map neurons $j$, $j+1$, the interaction strength to said map neurons is given by

    $$W_{i,j} = \alpha_{(j+1)/2} \cdot \cos(\varphi_{(j+1)/2}(J_{(j+1)/2})(i))) \text{ for } j \text{ odd}$$

$$W_{i,j} = \alpha_{j/2} \cdot \sin(\varphi_{j/2}(J_{j/2}(i))) \text{ for } j \text{ even}$$

wherein

$$\varphi_k(i) = \pi \cdot (i-1)/(2 \cdot (R_k-1)).$$

9. The method of claim 8, wherein $n = 1$ and $K = 2$ and

$$W_{i,1} = \alpha \cdot \cos(\varphi_1(i))$$

$$W_{i,2} = \alpha \cdot \sin(\varphi_1(i)),$$

and wherein the matrix **B** has the form

$$B_{ij} = -\beta \text{ for all } i \text{ and } j$$

and wherein

$$\alpha \leq \sqrt{\frac{1}{N} + \beta} \ .$$

10. The method of one of the claims 8 or 9, wherein for at least one dimension $d$ of said matrix **M'**, there are at least two pointer neurons with indices $j'$, $j''$ with the interaction strengths

$$W_{ij'} = \alpha'_d \cdot \cos(\varphi_d(J_d(i)) \cdot z)$$

and

$$W_{ij''} = \alpha'_d \cdot \sin(\varphi_d(J_d(i)) \cdot z),$$

wherein $z$ is an integer larger than 1 and $\alpha'_d$ is a constant.

11. A circuit for carrying out the method of one of the preceding claims characterised in that it comprises a network of circuit elements, wherein each circuit element represents a value, the time dependence of which value depends on the current values of the circuit and of input values to the circuit elements, characterised in that $N$ circuit elements are map neurons and a $K$ circuit elements are pointer neurons, wherein $N$ is much larger than $K$,

wherein the time derivatives of the values $M_i$ of the map neurons are given by

$$\frac{\partial}{\partial t}f(M) = -M + T(WP + BM + \mu),$$

where **M** is the array $(M_1, ..., M_N)$ of the values of the map neurons, and wherein the time derivatives of the values $P_i$ of the pointer neurons are given by

$$\frac{\partial}{\partial t}f(P) = -P + T(W^T M + \pi),$$

wherein **P** is the array $(P_1, ..., P_K)$ of the values of the pointer neurons,
wherein **W** is a $N \times K$ matrix with elements $W_{ij}$ describing the interaction strength from each pointer neuron to each map neuron, $\mathbf{W}^T$ is the transposed of $\mathbf{W}$, $\mathbf{B}$ is a $N \times N$ matrix with elements $B_{ij}$ describing the interaction strength between each pair of map neurons, $\mu$ is the vector $(\mu_1, ..., \mu_N)$ of input values to the map neurons, $\pi$ is the vector $(\pi_1, ..., \pi_N)$ of input values to the pointer neurons T is a non-linear transfer function and f a monotonically increasing function.

map neurons

pointer neurons

Fig. 1

global
inhibition

Fig. 2

**Fig. 3**

**Fig. 4**

**Fig. 5**

**Fig. 6**

European Patent Office

Application Number
EP 99 11 4895

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.CL7) |
|---|---|---|---|
| A | MUDRA R ET AL: "Neuromorphic active vision used in simple navigation behavior for a robot" PROCEEDINGS OF THE SEVENTH INTERNATIONAL CONFERENCE ON MICROELECTRONICS FOR NEURAL, FUZZY AND BIO-INSPIRED SYSTEMS, PROCEEDINGS OF THE SEVENTH INTERNATIONAL CONFERENCE ON MICROELECTRONICS FOR NEURAL, FUZZY AND BIO-INSPIRED SYSTEMS. MICRONEURO'99, GRA, 7 - 9 April 1999, pages 32-36, XP002130245 1999, Los Alamitos, CA, USA, IEEE Comput. Soc, USA ISBN: 0-7695-0043-9 * page 32, left-hand column, line 1 - page 35, left-hand column, line 16 * | 1 | G06N3/04 |
| A | HAHNLOSER R H R: "Generating network trajectories using gradient descent in state space" 1998 IEEE INTERNATIONAL JOINT CONFERENCE ON NEURAL NETWORKS PROCEEDINGS. IEEE WORLD CONGRESS ON COMPUTATIONAL INTELLIGENCE (CAT. NO.98CH36227), PROCEEDINGS OF ICNN '98 – INTERNATIONAL CONFERENCE ON NEURAL NETWORKS, ANCHORAGE, AK, USA, 4-9 MAY 1998, pages 2373-2377 vol.3, XP002130246 1998, New York, NY, USA, IEEE, USA ISBN: 0-7803-4859-1 * page 2373, left-hand column, line 1 – page 2375, left-hand column, line 22 * | 1 | TECHNICAL FIELDS SEARCHED (Int.CL7) G06F |

The present search report has been drawn up for all claims

| Place of search | Date of completion of the search | Examiner |
|---|---|---|
| THE HAGUE | 10 February 2000 | Schenkels, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)